(19) Europäisches Patentamt
European Patent Office
Office européen des brevets

(11) EP 1 524 491 A1

(12) EUROPEAN PATENT APPLICATION

(43) Date of publication:
**20.04.2005 Bulletin 2005/16**

(51) Int Cl.$^7$: **G01B 9/02**

(21) Application number: **03447256.3**

(22) Date of filing: **16.10.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **UNIVERSITE LIBRE DE BRUXELLES**
**1050 Bruxelles (BE)**

(72) Inventors:
- **Dubois, Frank**
  **1170 Brussels (BE)**
- **Yourassowsky, Catherine**
  **1170 Brussels (BE)**

(74) Representative: **Van Malderen, Joelle et al**
**Office Van Malderen,**
**Place Reine Fabiola 6/1**
**1083 Bruxelles (BE)**

# (54) Apparatus coupling an interferometer and a microscope

(57) The present invention is related to an apparatus and a process for the visualisation of a sample, said apparatus comprising as elements at least:

(i) a sample cell (2) able to contain a sample to be studied;
(ii) an illumination source (1) for illuminating said sample and creating thereby an incident sample beam;
(iii) a microscope (3,4) coupled to an interferometer (5) for generating an interference pattern from said incident sample beam by splitting said beam into a first output beam and a second output beam following two different optical paths in the interferometer and by recombining said output beams;
(iv) imaging means (7) for detecting said interference pattern,

said apparatus being characterised in that the apparatus further comprises optical tilting means located in one of the optical paths of the interferometer so as to create a tilt between the first output beam and the second output beam said tilt resulting into a shift between the first output beam and the second output beam on the imaging means (7), and the relative arrangement of said optical tilting means and the other elements of the apparatus being such as to obtain a differential interference pattern on said imaging means (7).

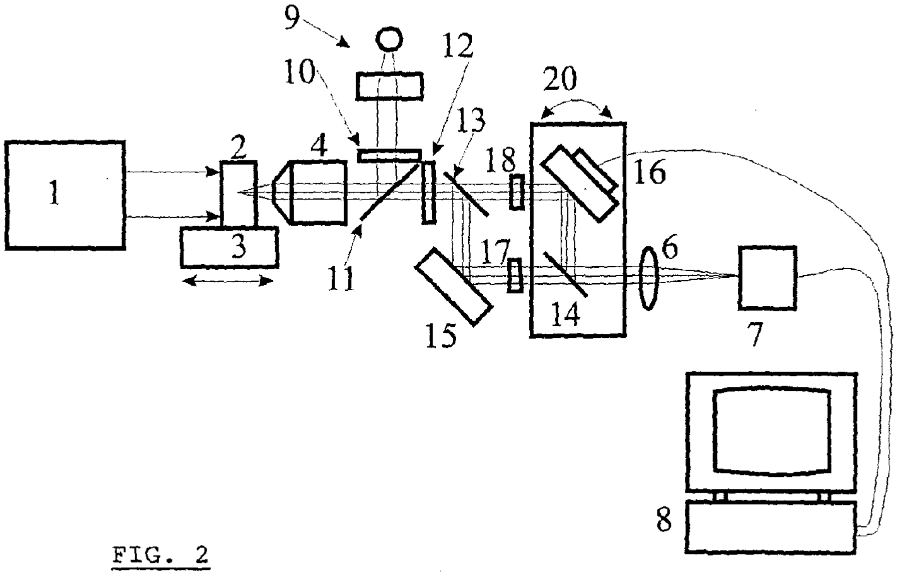


FIG. 2

EP 1 524 491 A1

## Description

### Field of the invention

The present invention is related to an apparatus coupling an interferometer and a microscope, and which can be used for different optical interesting applications such as differential contrast microscopy, digital holographic microscopy and measurement of refractive index differential inside a transparent sample.

Said apparatus can be advantageously used in the study and characterisation of different kinds of samples, in particular of thick biological samples.

### State of the art

The digital holographic technique is an emerging technology in various fields of optics. In digital holography, the interference patterns are recorded with an electronic camera and the holographic reconstruction is performed by numerical means [1].

Several optical methods have been implemented to extract the phase and amplitude information of the object beam from the recorded interference pattern [2-3]. With the phase and the amplitude information, the digital holography reconstruction simulates the optical beam propagation by using a discrete implementation of the Kirchhoff-Fresnel (KF) propagation equations.

The digital holographic methods have been demonstrated in various experimental situations [4-12], and are very promising in optical microscopy where the three-dimensional reconstruction capability overcomes the very limited depths of field due to the high magnifications [13-15].

When a digital hologram of an experimental sample is recorded, the digital holographic reconstruction consists in refocusing by numerical means and without any mechanical motion the sample slice by slice in such a way that samples thicker than the depth of field of usual optical microscope can be investigated.

With respect to classical transmission microscopy, the depth of investigation is multiply by a factor of approximately 80. With respect to classical optical microscopy, the advantages of digital holography to investigate thick samples are:

- As there is no mechanical motion, the recoding for the complete information about the sample volume requires only few images (typically 1, 3, 4 or 5 - depending on the expected optical quality of the result). It results that dynamical phenomena can be investigated without time distortion.
- Thanks to the several recorded images, all the sample information are recorded in an optical phase and an optical intensity images. It results that the data are considerably compressed with respect to the classical system that are using mechanical translation system to scan the sample in depth.

Several implementations of the digital holography have been proposed. For example, T. Zhang and I. Yamaguchi proposed a Mach-Zehnder interferometer configuration where the sample is in one arm of the interferometer [13]. There is a piezoelectric transducer that allows the implementation of the phase shifting technique [2] for an accurate determination of the optical phase of the signal. Those authors are using a laser beam, as very often in holography, which is a source of coherent noise of the results.

Recently a configuration without imaging lens between the sample and the electronic image sensor has been proposed in a document of the same authors[14]. In this configuration, the authors showed that it is possible to change the magnification of the system by changing the shape of the reference beam. A laser source is also used in this configuration.

It has also been proposed to use a Michelson interferometer configuration with a laser beam source to investigate samples in reflection. A phase stepping method implemented thanks to a piezoelectric transducer is also implemented[7].

In another document, an apparatus combining a Mach-Zehnder configuration with a phase stepping method with a partial coherent source has been disclosed[15]. The use of this type of illumination allows to drastically reduce the problem of coherent noise created by the laser beam. This apparatus provides very high quality results but requests for each new sample some adjustments.

It was also proposed a method to avoid diffraction effects on the hologram borders and a scheme to perform 3D pattern recognition based on the digital holograms obtained with the microscope[16, 17].

The patent application WO03/002972 describes the coupling of a digital holographic system using a partially coherent light with a fluorescence system to make possible the 3D reconstruction of fluorescence signal[18]. This system is using a partially coherent beam for the digital holography and a fluorescence source. The process consists in merging both signals to perform the reconstruction of the fluorescence signal. Although this system is powerful, it requests that

the fluorescent parts of the sample be differentiate with respect to the background for the digital holographic signal. The here above described system can work with the only fluorescent illumination.

All the configurations described here above share the common technical feature of using interferometers wherein the sample is placed in one arm of the interferometer.

A direct implementation of digital holography with fluorescent image is disclosed in the references 19-22, and namely in the references 19-20. In said two last references, Indebetouw *et al*. proposed a configuration wherein the sample can be placed in front of a Mach-Zehnder or Michelson interferometer, and wherein the sample signal is traveling in both arms of the interferometer. In order to retrieve a configuration that is similar to the ones described here above, the authors are placing a focusing stage and a pinhole in the reference arm of the interferometer. The role of this subsystem is to smooth by optical filtering process the reference beam that becomes similar to a reference beam of the other configurations. This configuration allows, in principle, to implement digital holography for fluorescent samples.

However, the filtering process in the reference beam considerably changes the illumination level and the coherence properties of the reference beam. The change of illumination has to be adapted by balancing the beam ratio in the arms of the interferometer. The change of the partial coherent properties obliges to work in a defocus mode to obtain point spread functions of similar size for the object and the reference beams. It results that the interferometric fringe contrast is weak. The digital holographic reconstruction is less powerful leading to a significant decrease of the resolution that could be expected with such typical magnification. It has to be noted that no experimental examples is given in the case of fluorescence sample.

There exist also methods that are based on a scanning system and a heterodyne detection to record digital holograms. With these methods, the sample is scanned by two focused interfering beam at the same location[20,21]. The diffused or fluorescence light and reference beam are detected respectively by a photomultiplier and by a photodiode. The hologram construction is performed by electronic means that makes those methods very different with respect to the previous ones. With respect to the publications, the image quality is rather poor.

In other words, the apparatus working in digital holography according to the state of the art present technical constraints such as the choice of a limited range of illumination sources, multiple and complex adjustments, complexity of data treatments, reliability of the three-dimensional reconstruction, limited image quality ... so that it would be appreciable to have an alternative apparatus and method.

## Aims of the invention

The present invention aims to provide a process and an apparatus for obtaining by digital holographic microscopy three-dimensional images of a sample which could be an alternative to the processes and apparatus of the state of the art mentioned hereabove.

In particular, the present invention aims to provide a process and an apparatus which could give very high quality images of the sample with moderate acquisition time.

Another aim of the present invention is to provide a process and an apparatus which would be easily carried out, with minimal technical adjustments.

The present invention also aims to provide a process and an apparatus of moderate cost comparatively to the processes and apparatus of the state of the art.

## Summary of the invention

The present invention is related to an apparatus for the visualisation of a sample, said apparatus comprising as elements at least:

(i) a sample cell able to contain a sample to be studied;
(ii) an illumination source for illuminating said sample and creating thereby an incident sample beam;
(iii) a microscope coupled to an interferometer for generating an interference pattern from said incident sample beam by splitting said beam into a first output beam and a second output beam following two different optical paths in the interferometer and by recombining said output beams;
(iv) imaging means for detecting said interference pattern,

said apparatus being characterised in that the apparatus further comprises optical tilting means located in one of the optical paths of the interferometer so as to create a tilt between the first output beam and the second output beam said tilt resulting into a shift between the first output beam and the second output beam on the imaging means, and the relative arrangement of said optical tilting means and the other elements of the apparatus being such as to obtain a differential interference pattern on said imaging means.

Preferably, said apparatus further comprises an optical compensator located in the other optical path of the

interferometer.

Preferably, said optical compensator is an optical flat.

In a particularly advantageous manner, said optical tilting means comprises a wedge.

Said optical tilting means may also comprise at least one optical element positionable and orientatable relatively to the other elements of the apparatus. It means that in this embodiment, the tilting effect of the optical tilting means is obtained by selecting a certain position and orientation of said tilting means (they have no "intrinsic tilting properties").

Preferably, the imaging means are two-dimensional imaging means defined by a pixel size and a number of pixels per dimension, and said shift is smaller than said pixel size.

Preferably, the apparatus according to the invention further comprises computer means for recording and processing said detected interference pattern so as to provide reconstructed 3D-images of the sample.

Preferably, the interferometer comprises as elements a first sub-unit and a second sub-unit, the first sub-unit of the interferometer being fixed, the second sub-unit being movable in translation and/or in rotation so as to allow an equalization of the optical paths of the first output beam and of the second output beam.

Preferably, the second sub-unit is mounted on a mechanical system, preferably comprising a piezoelectric transducer for performing said movement in translation and/or in rotation.

According to a preferred embodiment, the interferometer is based on a Mach-Zehnder interferometer wherein the first sub-unit includes a first beam splitter and a first mirror, and the second sub-unit comprises a second beam splitter and a second mirror, the first optical path comprising the first beam-splitter, the second mirror and the second beam splitter, and the second optical path comprising the first beam-splitter, the first mirror and the second beam splitter.

According to another embodiment, the interferometer is based on a Mach-Zehnder interferometer wherein the first sub-unit and the second sub-unit include respectively a first optical prism and a second optical prism, said first optical prism and said second optical prism being each part of the two interferometric optical paths.

Advantageously, the apparatus of the invention is adapted so as to allow the implementation of the phase stepping method for extracting the optical phase information from the interference pattern and reconstructing an image of the sample.

Preferably, the illumination source is selected from the group consisting of coherent sources, partially coherent sources, and spatially incoherent sources.

According to another embodiment, the interferometer is based on a Michelson interferometer, the first sub-unit comprising a beam-splitter and a first mirror, the second sub-unit comprising a second mirror.

In this embodiment, the optical tilting means preferably comprises said first and second mirrors and said beamsplitter themselves whose position and orientation relatively to the other elements of the apparatus is adjusted (controlled) so as to obtain said tilt between the output beams.

Preferably, the illumination source is selected from the group consisting of spatially coherent sources, spatially partially coherent sources, spatially incoherent sources, and fluorescence excitation sources.

According to the invention, the microscope comprises an objective and the apparatus may further comprise translation means for moving the sample cell in front of said objective.

The present invention is also related to a process for the visualisation of a sample, characterised in that it comprises the step of using the apparatus according to any one of the preceding claims.

Preferably, said process comprises the following steps:

- illuminating a sample to be studied with the illumination source, so as to have a sample beam;
- selecting the transmitted part of said sample beam through a microscope lens of the microscope;
- with the interferometer:
  - splitting said part of the sample beam into a first output beam and a second output beam of different optical paths;
  - creating a tilt between said first output beam and said second output beam inside the interferometer with the optical tilting means placed in one of said optical paths;
  - recombining said output beams and equalising their optical paths,

so that said output beams may interfere according an interference pattern on the imaging means, the relative arrangement of said optical tilting means and the other elements of the apparatus being adjusted so that said interference pattern formed on the imaging means is a differential interference pattern.

Preferably, said process further comprises the step of recording and processing said interference pattern with the computer means so as to obtain a reconstructed 3D-image of the sample.

The present invention is also related to the uses of said apparatus or said process, namely in differential contrast microscopy and/or in digital holographic microscopy, and namely in digital fluorescence holography, and/or

for the measurement of micro-distributions of refractive index inside a sample.

## Short description of the drawings

Fig.1 corresponds to a schematic representation of an apparatus according to the present invention.
Fig.2 represents a first preferred embodiment of an apparatus according the invention.
Fig.3 represents a second embodiment of an apparatus according the invention.
Fig.4 represents a fourth embodiment of an apparatus according the invention.

## Detailed description of the invention

Fig.1 represents a schematic view an apparatus according to the present invention. Said apparatus or device comprises as elements at least:

- a sample cell able to contain a sample 2 to be studied;
- one or more illumination sources 1, 9 for illuminating said sample cell and creating thereby an incident sample beam;
- a microscope comprising an imaging unit, said unit comprising an objective or microscope lens 4 and focusing means 6.

Inside said microscope is integrated an interferometer for generating an interference pattern from said incident sample beam by splitting it into a first output beam and a second output beam of different optical paths and by recombination of said output beams.
The apparatus of the present invention further comprises:

- two-dimensional imaging means 7 for detecting said interference pattern, said imaging means 7 being defined by a pixel size and a number of pixels in one dimension;
- computer means 8 for recording and treating said detected interference pattern so as to provide reconstructed 3D-images of the sample.

Preferably, the apparatus also comprises driving or controlling means 8 for driving or controlling the apparatus and namely controlling the relative position and orientation of at least part of said elements so as to form the interference pattern on the imaging means 7.
The interferometer 5 in the apparatus according to the invention corresponds to a "differential interferometer". Indeed, said interferometer comprises in one of its optical paths optical tilting means able to introduce a small tilt between the first output beam and the second output beam, said tilt resulting into a small shift between the first output beam and the second output beam on the imaging means, said shift being smaller than the pixel size of the imaging means.
Said optical tilting means is arranged relatively to the other elements of the apparatus, and especially of the interferometer in such a way that the first output beam and the second output beam are in spatial coincidence in the plane of the front focal plane of the second lens of the imaging system. With this condition, the differential phase measured by the apparatus is multiplied by a constant phase factor over the complete field of view.
It is meant by "differential interferometer" that the interferometer 5 provides an optical differential information on the imaging means from which a quantitative differential optical amplitude modulated by the optical properties of the sample can be then extracted by the analysing means. Thanks to this differential information, the computer means may determine the complex optical field in the focus plane by integration.
With this optical field information, the digital holographic process is a tool to refocus, by digital means, the sample images in planes that are parallel to the original focused plane.
Moreover, as the optical signal (interferometer signal) that is imaged on the imaging means (imaging means sensor) is a differential one, the proposed system can be used also as a differential contrast microscope.
Complementary information concerning the characteristics of the different components in the apparatus of the invention is provided hereafter.

### *Optical light sources:*

The optical light sources 1 can be any spatially coherent, partially coherent, or incoherent light sources, which are able to work in transmission and/or in reflection. Examples of such optical sources are arc lamps, light emitting diodes, laser sources or fluorescent excitation sources. Reference is made to the published document WO 03/002972

of the Applicant which widely discloses the optical characteristics of such sources.

The apparatus may comprise several optical light sources covering different ranges of the light spectrum so that by combining them multi-spectral implementation can be performed. For example, for true color applications, red, green and blue sources may be combined.

Each optical source of the present apparatus has a narrow bandwith. It is meant by "narrow bandwidth" that the optical path difference between the two optical paths of the interferometer is smaller than the temporal coherence of the beam.

For the observation of fluorescent samples, a set of filters as used in classical fluorescence microscopy and chosen for the application is placed after the microscope lens. The apparatus of Fig.1 is adapted for such application and comprises an fluorescence excitation light source 9, an excitation filter 10, a dichroic mirror 11, and a barrier filter 12.

*Spatial incoherent sources*

Considering a quasi monochromatic completely spatial incoherent illumination on the sample, as the light beam is transmitted by lenses of finite apertures, there is an increase of a spatial coherence in the detection plane. Assuming a completely incoherent illumination, a typical width *w* of the spatial coherence in the detection plane is given by:

$$w \approx \frac{\lambda f}{D} \qquad (20)$$

where Dis the diameter of the exit pupil of the microscope lens 4, f is the focal length of the lens 6 (focusing means) and $\lambda$ is the average wavelength. Therefore, if the shift $\delta_x$ is smaller than $w$, the beams that follow the two paths of the interferometer are interfering in the detector plane. The shift $\delta_x$ is adjusted to fulfil this condition.

As the system is interfering even with an incoherent source, that will be also the case for partially coherent illumination and for coherent illumination. The selection of the source depends on a trade off between the digital holographic reconstruction distance and the coherent noise to be reduced.

*Fluorescent excitation sources*

A spatial case of the incoherent illumination is the Fluorescent excitation sources. This application is now very important because fluorescent microscopy became one of the major tool in biology researches to investigate the biochemical machinery. The scheme of the set up working in reflection is already described and shown by the figures 1 and 2.

*Incoherent source in reflection*

The sample can be also illuminated by an external spatially incoherent and quasi monochromatic source to illuminate object in reflection. The way to record interference information by the present invention are identical to the ones described in the detailed description. This configuration can be useful for topographic study or micro samples.

*Partially spatial coherent illumination*

It is demonstrated that the partial coherent illumination provides an optical quality that cannot be achieved by coherent illumination [15, 18]. Köhler illumination is an example of partially coherent illumination with the difference that we are using quasi monochromatic sources.

This type of source is realized by increasing the spatial coherence of an incoherent source or by reducing the spatial coherence of a coherent beam as described in the published document WO 03/002972 of the Applicant.

*Combination of a partially coherent illumination with a fluorescent excitation source*

Several types of illuminations can be combined to extract on the same sample several complementary information. The figures 1 and 2 show the combination of the illumination by transmission with a partially coherent source with the fluorescent excited illumination. In this way, digital holographic information with the two types of illumination can be sequentially collected and merged.

*Coherent illumination*

Although coherent illumination provides information of lower optical quality, this type of source can be implemented. This type of sources is also described in the published document WO 03/002972 of the Applicant.

***Sample cell:***

The sample cell in the apparatus according to the invention is adapted for receiving liquid or solid samples, including thick biological samples.

***Microscope:***

For the microscope imaging unit as used in the apparatus according to the invention one defines two focal lengths, $f_{ML}$ corresponding to the focal length of the microscope lens 4 and f corresponding to the focal length of the focusing means 6.
The magnification of the image provided to the imaging means 7 is defined by the ratio $f/f_{ML}$. In order to adapt the magnification to the application, the microscope lens (objective) 4 can have various focal lengths $f_{ML}$.

***Imaging means:***

Different kinds of imaging means 7 can be used in the apparatus of the invention for detecting the interference pattern and giving images of the sample to be tested, and preferably electronic imaging devices such a CCD camera. The position of the imaging means 7 relatively to the microscope is such that its sensor is in the back focal plane of the focusing means 6 of the microscope.

***Interferometer:***

Furthermore, the differential interferometer 5 in the apparatus of the invention comprises an interferometer, such as a Mach-Zehnder or a Michelson interferometer, adapted to work as a differential interferometer. Said interferometer comprises at least a first beamsplitter, and possibly a second beamsplitter, as well as a set of mirrors. The interferometer further includes two interferometric arms corresponding to two independent optical paths. The first beamsplitter allows to separate a beam emerging out of the microscope lens 4 into two beams following said two optical paths. These two beams are then traveling independently and are finally recombined by a second beamsplitter or the same first beamsplitter. The focusing means 6 of the microscope has thus in its front focal plane two superposed beams $i_1(x,y)$ and $i_2(x,y)$ originated from the two interferometer arms (the two optical paths).
The interferometer is adjusted so as to have a minimized optical path difference between the two beams. Therefore, $i_1(x,y)$ and $i_2(x,y)$ are only different by a lateral shift (sx,sy) and by their propagation directions toward the focusing means of the microscope.
As the apparatus can work with a wide range of coherence sources, the two interferometric optical paths have to be equalized within a range of few wavelengths (typically $5\lambda$, where $\lambda$ is the wavelength). For this purpose a part of the interferometer is placed on a mechanical device that can be rotated around an axis.

***Optical components for creating the tilt on the imaging means :***

As mentioned hereabove, the apparatus according to the invention comprises optical tilting means the position and orientation of which relatively to the other components of the apparatus can be adjusted in such a way that:

- there is a small tilt between the two beam propagation directions in front focal plane of the second lens of the microscope imaging system;
- in addition, the two beams traveling in the interferometer are spatially superposed, $i_1(x,y)=i_2(x,y)$, in the front focal plane of the focusing means 6 of the microscope imaging unit so that the differential phase measured by the system is multiplied by a constant phase factor over the complete field of view.

As mentioned hereabove, the tilt is selected in such a way that the small shift between the first output beam and the second output beam on the imaging means is smaller than the pixel size of imaging means (for example, the typical size of a pixel is 7μm x 7μm for an electronic imaging device sensor such as a CCD sensor).
Several embodiments of the apparatus according to the invention can be envisaged, wherein said optical tilting means are specific elements of the apparatus implemented to a classical interferometer in an adequate manner

so as to obtain a differential interferometer that is to say the desired tilting between the two beams together with the differential interference pattern on the imaging means. Several embodiments of the present apparatus can also be proposed according to the kind of interferometers on which the differential interferometer is based. Examples of preferred embodiments are disclosed hereafter.

***Computer means and treatment of the optical signal (interference pattern):***

In order to get the phase information from the differential optical image, an analysing method known as the phase stepping method is implemented by means of the computer means. For this purpose, one of the mirrors of the interferometer is placed on a piezoelectric transducer controlled by the computer means so as to introduce small incremental optical path changes between the two arms of the interferometer (typically incremental path change $\lambda/4$). Several interferometric images (typically 3 to 5) are recorded with those incremental path changes and those images are used to compute the optical phase by the phase stepping method[2].

For multi-spectral implementation, a specific calibration of the piezo-transducer motion amplitude is requested for each used wavelength band.

For the optional measurement of three-dimensional micro-distributions of refractive index (tomographic implementation), a high accuracy motorized translation means 3 (see Figure 1) is used along the optical axis for moving the sample cell in front of the microscope lens 4. In each position of the translation means 3, several fringe images are recorded to extract the information by the phase stepping technique. The low spatial coherence provides, for each position of the translation means, the measurement of the differential refractive index in a slice. This signal is integrated to determine the refractive index in each slice. The complete three-dimensional distribution results from the digital merging of all the measured slices.

**Description of a preferred embodiment of the invention**

Figure 2 presents a preferred embodiment of an apparatus according to the present invention.

In said embodiment, the specific differential interferometer is based on a Mach-Zehnder interferometer and the imaging means corresponds to an electronic imaging device such as a CCD camera. Said differential interferometer comprises a first beam splitter 13 and the second beam splitter 14 as disclosed hereabove. It means that the first beam splitter 13 splits the beam incident on the interferometer 5 in two parts: one reflected beam and one transmitted beam.

The beam reflected by the beam splitter 13 is reflected a second time by a first mirror 15 and is after transmitted by the beam splitter 14 and by the focusing means 6 of the microscope to be incident in the sensor of imaging means 7 (CCD camera).

The beam transmitted by the beam splitter 13 is reflected by a second mirror 16 and by the beam splitter 14. It is then transmitted by the focusing means 6 and is incident in the imaging sensor of the CCD camera 7 where it is optically interfering with the beam originally reflected by the beam splitter 13.

In this preferred embodiment, the interferometer comprises two interferometric arms: a first arm defined by the elements 13-15-14 and corresponding to a first optical path, and a second arm defined by the elements 13-16-14 and corresponding to a second optical path.

Furthermore, the apparatus comprises as optical tilting means a wedge 17. Said wedge 17 is placed in the optical path of one arm of the interferometer, more precisely in the first arm, in the front focal plane of the focusing means 6. The extra optical path length introduced by the wedge 17 is compensated by an optical compensator, which can be an optical flat 18, placed in the other optical path (second arm) of the interferometer 5, between the mirror and the beamsplitter. The beam tilt introduced by the wedge 17 is small enough to achieve a differential shift between the first output beam and the second output beam that is smaller than the pixel size of the sensor of the electronic imaging device 7. It means that, for example, for a typical pixel size for a CCD 7μmx7μm, there is a typical tilt angle of 3.6". Adjustments in the relative position and orientation of the wedge 17 and the optical flat 18 have to be done to achieve the accurate spatial superposition of the first output beam and the second output beam in the interferometer 5 in the front focal plane of the focusing means 6.

It should be noted that in this preferred embodiment of the invention, the apparatus also comprises a mechanical sub-system 20 on which the mirror 16 and the beam splitter 14 are located in order to accurately equalize the two interferometric optical paths. Said mechanical sub-system 20 can be rotated around an axis that would correspond in the embodiment of Fig.2 to an axis perpendicular to the plane of the drawing and that would be located between the mirror 16 and 15. Thanks to this rotation, the optical lengths 13-16-14 and 13-15-14 can be accurately equalized.

It should be noted that theoretically the same adjustments could be achieved without the wedge 17 and the optical compensator 18 by adequate adjustment of the beamsplitters 13, 14 and of the mirrors 15, 16. However, in practice, these types of adjustements are difficult to control accurately in quantitative way.

Moreover, in this embodiment, the apparatus comprises also a piezoelectric transducer on which the mirror

16 is located in order to introduce small optical path changes between the two arms of the interferometer, and thus to implement the phase stepping method.

It should be noted that in this preferred embodiment, the computer 8 drives the apparatus and namely the movements of the mechanical sub-system 20, of the piezoelectric transducer. The computer 8 also records the optical signal and processes the optical information contained therein to provide images of the sample.

Furthermore, in the case of fluorescence implementations, the optical method to generate the fluorescence excitation of the sample is classic. An extended excitation source 9 that has a significant power density in the spectral range to excite fluorescent emission of some specific molecules is collimated by a condenser. An example of such molecules is the Green Fluorescent Protein (GFP). The beam is filtered by the excitation filter 10 that reduces the spectral width around the average excitation wavelength. A dichroic mirror 11, optimized to reflect the beam in this spectral range, redirects the beam through the microscope lens 4 to excite the fluorescence of the sample. A part of fluorescent light emitted by the sample is going back through the microscope lens 4 where it is transmitted by the dichroic mirror 11 and it is then spectrally filtered by a barrier filter 12 centered on the average fluorescent wavelength. The beam follows after the optical paths in the apparatus to create the differential interferometric behavior. The fluorescent excitation can be also achieved by transmission illumination.

In addition, for an optional measurement of three-dimensional micro-distributions of refractive indexes (tomographic implementation), the apparatus comprises a high accuracy motorized translation means along the optical axis for moving the sample in front of the microscope lens. Said translation means have the reference 3 in Fig.1. For this implementation, the optical source 1 works in transmission and is of very low spatial coherence width. In this operating mode, interferometric images of the sample are recorded by incrementally scanning the sample in depth.

## Other embodiments

### *Second embodiment*

A second embodiment of the apparatus of the invention is illustrated in Fig.3. In said embodiment as in the preferred embodiment disclosed hereabove, the differential interferometer is also based on a Mach Zehnder interferometer and comprises as optical tilting means a wedge 17, and said wedge 17 is also coupled to an optical flat 18.

The main difference with the embodiment of Fig.2 concerns a special implementation of the Mach-Zehnder interferometer. The mirrors 15, 16 and the beam splitters 13,14 are replaced by two special custom prisms 21,22, preferably made in bulky optical transparent materials. Those one are constituted by two optical parts that are cemented together. In each prism 21,22, the beam splitter is located at the boundary between the two cemented optical parts. The mirror is implemented by a total internal reflection on a prismatic face of the prism.

Similarly to the preferred embodiment of Fig.2, the second prism 22 of the interferometer 5 is placed on a mechanical sub-system 20 which can slightly and accurately be rotated around an axis that is perpendicular to the plane of the drawing in Figure 3 in order to equalize the two interferometric optical paths. A piezoelectric transducer 23 driven by the computer means 8 allows to rotate slightly on the mechanical sub-system 20 the optical prism 22 around an axis that is also perpendicular to the plane of the drawing in Figure 3, in order to implement the phase stepping method.

Comparatively to the first embodiment, said second embodiment allows also to implement the fluorescence mode and the optional measurement of three-dimensional micro-distributions of refractive index (tomographic implementation), but said embodiment offers also specific advantages:

- The prisms 21, 22 can be made with an extremely high accuracy and with small tolerances on the angles and on the sizes that are compatible with the accuracy that is needed for the implementation of the differential interferometer;

- The interferometer keeps its alignment even if one prism is slightly rotated. It results that this type of interferometer is very stiff and can be used in adverse environments;

- The apparatus is particularly compact.

### *Third embodiment:*

A third embodiment of the apparatus according to the present invention is disclosed hereafter, corresponding to a modified version of the embodiments of Fig.2 and Fig.3, wherein there is no piezoelectric transducer 23.

This third embodiment is advantageously adapted to the investigation of fast phenomena, which are normally considered as immobile in comparison to the recording time of a usual electronic imaging device 7, which is typically

of 0.1ms for a usual CCD camera. Comparatively to the embodiments previously disclosed (first and second), the apparatus presents also a wedge 17 and an optical flat 18 as disclosed hereabove. However, said embodiment presents the following changes. The first output beam and the second output beam in the front focal plane of the focusing means 6 are spatially shifted (typically with a shift of 2mm) by rotating the optical flat 18, instead of placing them in coincidence. With this condition, the optical phase difference between the first output beam and the second output beam in the plane of the imaging means 7 is linearly varying over the complete field of view. It results that the measured intensity signal is modulated by a fringe pattern with a period which is adjusted by changing the shift between the two beams in the front focal plane of the focusing means 6. With this type of fringe pattern, the optical amplitude, with a loss of resolution, is computed from a single fringe image thanks to the so called Fourier method[23]. This configuration uses no piezoelectric transducer nor the phase stepping method.

Even if there is a loss of resolution by a factor of at least 2 with this embodiment compared to embodiments using the phase stepping method, such an embodiment offers the advantage of providing a complete holographic information with a single image instead of several ones as necessary for the phase stepping method. Therefore, it is possible to investigate fast phenomena provided that the shutter speed of the electronic imaging device 7 is short enough to freeze the studied phenomena.

***Fourth embodiment:***

In said fourth embodiment, the differential interferometer 5 is based on a Michelson interferometer configuration as depicted in Figure 4. Said differential interferometer comprises:

- only one beamsplitter 13' which has the same function as the first beamsplitter 13 and the second beamsplitter 14 taken together in the apparatus of Fig.2;
- one mirror 15 similar to the mirror 15 of Fig.2;
- one mirror 16 which is mounted on a piezoelectric transducer in order to implement the phase stepping method, said transducer being placed on a mechanical subsystem 20.

The apparatus further comprises as in the former embodiments an optical source 1 for illuminating in transmission a sample 2 in a cell which is located in the focal front plane of a microscope lens 4. As previously disclosed, the beam transmitted by said microscope lens 4 is divided by the beam splitter 13' into a reflected beam, corresponding to a first output beam, and a transmitted beam, corresponding to a second output beam.

The first output beam is reflected a second time by the mirror 15. Said beam is then transmitted by the beam splitter 13' and by the focusing means 6 before to be incident on the imaging means 7 (which can be a CCD camera).

The second output beam is reflected by the mirror 16, is then reflected by the beam splitter 13' and is transmitted by the focusing means 6 to be incident on the sensor of the imaging means 7.

The optical paths of the first output beam and the second output beam incident on the sensor are made equal by adjusting the position of the mirror 16 thanks to a global translation of the mechanical sub system 20 along the optical axis as previously disclosed.

According to the invention, the interference pattern between the first output beam and the second output beam is recorded. The position and orientation of the mirrors 15 and 16, and the beamsplitter 13' of the interferometer are adjusted in such a way that:

- There is a small tilt between the first output beam and the second output beam directions in the front focal plane of the focusing means 6. The tilt has to be selected in such a way that the two images originated from the two interferometer arms on the imaging means 7 sensor have a small shift that is smaller than the pixel size of the sensor;

- The two beams reflected and transmitted by the beamsplitter 13' are in coincidence in the plane of the front focal plane of lens 6. With this condition, the differential phase measured by the system is multiplied by a constant phase factor over the complete field of view.

*Theoretical background*

The mathematical analysis is the identical for the Mach-Zehnder and Michelson implementations.

The general form of the amplitude distribution in the front focal plane of the focusing means 6 is written by:

$$u_{ff}(x, y) = u_t(x, y) + u_r(x, y) \quad (1)$$

Where $u_t(x,y)$ and $u_r(x,y)$ are the transmitted and reflected amplitude distributions by the beam splitter (14 for the Mach Zehnder implementation) in the front focal plane of the focusing means 6.

Expressing the two above mentioned conditions:

- There is a small tilt between two beams in front of the lens L. It results that the two images on the CCD sensor have a small shift that is adjusted to be smaller than the pixel size of the CCD;
- The two beams reflected and transmitted by the beamsplitter (14 for the Mach Zehnder implementation) are in coincidence in the plane of the front focal plane of focusing means 6.

Thus:

$$u_t(x, y) = u_r(x, y)\exp\{j\phi\}\exp\{j2\pi(\alpha_x x + \alpha_y y)\} \quad (2)$$

where $(\alpha_x,\alpha_y)$ is the tilt vector between the propagation direction of $u_t(x,y)$ and $u_r(x,y)$, $j = \sqrt{-1}$ and $\phi$ is a global optical phase change between $u_t(x,y)$ and $u_r(x,y)$.

As there is a 2D Fourier transformation relationship between the front and the back focal plane of the lens L, for the $u_t(x,y)$ contribution, the following amplitude in the sensor plane is obtained:

$$U_t\left(\frac{x'}{\lambda f},\frac{y'}{\lambda f}\right) = U_r\left(\frac{x'-\delta_x}{\lambda f},\frac{y'-\delta_y}{\lambda f}\right)\exp(j\phi) \quad (3)$$

wherein $(x',y')$ are the spatial coordinates in the sensor plane, $U_t$ and $U_r$ denote the Fourier transformations of $u_t$ and $u_r$, $\lambda$ is the wavelength, $f$ is the focal length of the lens 6 and $(\delta_x,\delta_y)=(\lambda f\alpha_x,\lambda f\alpha_y)$ is a shift between $U_t$ and $U_r$ in the sensor plane.

From Eqs. (2) and (3), it results that the amplitude distribution in the sensor plane is expressed:

$$U_{out}\left(\frac{x'}{\lambda f},\frac{y'}{\lambda f}\right) = U_r\left(\frac{x'-\delta_x}{\lambda f},\frac{y'-\delta_y}{\lambda f}\right)\exp(j\phi) + U_r\left(\frac{x'}{\lambda f},\frac{y'}{\lambda f}\right) \quad (4)$$

$U_r$ is decomposed as:

$$U_r\left(\frac{x'}{\lambda f},\frac{y'}{\lambda f}\right) = A_r\left(\frac{x'}{\lambda f},\frac{y'}{\lambda f}\right)\exp\left\{j\varphi\left(\frac{x'}{\lambda f},\frac{y'}{\lambda f}\right)\right\} \quad (5)$$

where $A_r$ is the modulus of the amplitude of $U_r$ and $\varphi$ is its phase.

It is assumed that the shift $(\delta_x,\delta_y)=(\lambda f\alpha_x,\lambda f\alpha_y)$ is small in such a way that:

$$A_r\left(\frac{x'-\delta_x}{\lambda f},\frac{y'-\delta_y}{\lambda f}\right) \approx A_r\left(\frac{x'}{\lambda f},\frac{y'}{\lambda f}\right) \quad (7)$$

It results that:

$$U_r\left(\frac{x'-\delta_x}{\lambda f},\frac{y'-\delta_y}{\lambda f}\right)\approx A_r\left(\frac{x'}{\lambda f},\frac{y'}{\lambda f}\right)\exp\left\{j\varphi\left(\frac{x'-\delta_x}{\lambda f},\frac{y'-\delta_y}{\lambda f}\right)\right\} \tag{8}$$

Using.Eqs.(8) and (5), Eqs.(4) is written by :

$$U_{out}\left(\frac{x'}{\lambda f},\frac{y'}{\lambda f}\right)=A_r\left(\frac{x'}{\lambda f},\frac{y'}{\lambda f}\right)\left[\exp\left\{j\varphi\left(\frac{x'-\delta_x}{\lambda f},\frac{y'-\delta_y}{\lambda f}\right)\right\}\exp(j\phi)+\exp\left\{j\varphi\left(\frac{x'}{\lambda f},\frac{y'}{\lambda f}\right)\right\}\right] \tag{9}$$

In order to extract the optical phase information, between $U_r$ and $U_t$, the phase stepping method i used where several interferometric images are recorded with small optical path shifts between the $U_r$ and $U_t$ by using the the piezomirror 16. To describe this process, Eq.(9) is rewritten by omitting the explicit dependency on the spatial coordinates:

$$U_{out} = A_r \exp\{j\varphi\}[\exp\{j\alpha\} + 1] \tag{10}$$

Where:

$$\alpha(x,y)=\varphi\left(\frac{x'-\delta_x}{\lambda f},\frac{y'-\delta_y}{\lambda f}\right)-\varphi\left(\frac{x'}{\lambda f},\frac{y'}{\lambda f}\right)+\phi \tag{11}$$

There exists different phase stepping methods that are using several numbers of interferometric images. The method described below uses four images, but methods with different image numbers can be used.

The method using four interferometric images introduces incremental optical phase shifts of 0,π/2,π,3π/2. The four interferometric amplitudes are defined by:

$$\begin{aligned}
U_{out}(0)&=A_r\exp\{j\varphi\}[\exp\{j(\alpha)\}+1]\\
U_{out}\left(\frac{\pi}{2}\right)&=A_r\exp\{j\varphi\}\left[\exp\left\{j\left(\alpha+\frac{\pi}{2}\right)\right\}+1\right]\\
U_{out}(\pi)&=A_r\exp\{j\varphi\}[\exp\{j(\alpha+\pi)\}+1]\\
U_{out}\left(\frac{3\pi}{2}\right)&=A_r\exp\{j\varphi\}\left[\exp\left\{j\left(\alpha+\frac{3\pi}{2}\right)\right\}+1\right]
\end{aligned} \tag{12}$$

As the images are detected in intensities, the intensities corresponding to the amplitudes of Eqs.(11) are given by:

$$
\begin{aligned}
I_{out}(0) &= 2A_r^2[1+\cos(\alpha)] \\
I_{out}\left(\frac{\pi}{2}\right) &= 2A_r^2[1-\sin(\alpha)] \\
I_{out}(\pi) &= 2A_r^2[1-\cos(\alpha)] \\
I_{out}\left(\frac{3\pi}{2}\right) &= 2A_r^2[1+\sin(\alpha)]
\end{aligned}
\tag{13}
$$

The optical phase $\alpha$ is obtained as follows:

$$
\alpha = Arc\tan_{2\pi}\left\{\frac{I_{out}\left(\frac{3\pi}{2}\right)-I_{out}\left(\frac{\pi}{2}\right)}{I_{out}(0)-I_{out}(\pi)}\right\}
\tag{14}
$$

Thanks to the Eq. (11), the optical phase difference between $U_r$ and $U_t$ quantitatively determined with and additive phase constant $\phi$. This last one can be removed by several ways. The simplest one is to perform a phase measurement without sample that will be considered after as the phase $\phi$ to be removed. Therefore, it is assumed that the quantitative information about the optical phase difference

$$
\varphi\left(\frac{x'-\delta_x}{\lambda f},\frac{y'-\delta_y}{\lambda f}\right)-\varphi\left(\frac{x'}{\lambda f},\frac{y'}{\lambda f}\right)
$$

is obtained. The addition of the different Eq. (13) provides the quantity $A_r^2$ which is the intensity information on the sample without phase information. As the signals are sampled in the detection plane with a sampling distance $\Delta_s$, it will be noted in the following the detected intensity by:

$$
A_{Dr}^2(\Delta_s k,\Delta_s l) = A_r^2\left(\frac{k\Delta_s}{\lambda f},\frac{l\Delta_s}{\lambda f}\right)
\tag{15}
$$

Where the subscript D means that a discrete function is to be considered.

Therefore, the proposed optical system and related interferometric methods provide the complete information about the intensity and the differential phase information on the sample. The knowledge of the optical phase of the object is determined by integrating the differential phase along the differential direction. For the sake of simplicity and without restricting the generality of the discussion, it is assumed that the optical phase difference is along the x axis and that the sign of $\delta_x$ is negative. Taking into account that the signals are sampled with the distance $\Delta_s$ in the sensor plane, the differential phase information that is recorded is given by:

$$
\Delta\varphi_D(k\Delta_s,l\Delta_s) = \varphi\left(\frac{k\Delta_s+|\delta_x|}{\lambda f},\frac{l\Delta_s}{\lambda f}\right)-\varphi\left(\frac{k\Delta_s}{\lambda f},\frac{l\Delta_s}{\lambda f}\right)
\tag{16}
$$

The subscript *D* also means that a discrete function is to be considered.

The sampling distance is assumed to be adapted to record the information without loss of significant information, i.e. without aliasing effect. In this case, the differential phase information can be expressed by:

$$\Delta\varphi_D(k\Delta_s, l\Delta_s) = C(\varphi_D(k\Delta_s, l\Delta_s) - \varphi_D((k-1)\Delta_s, l\Delta_s)) \quad (17)$$

where $\varphi_D(k\Delta_s, l\Delta_s)$ is the optical phase at the sampling position$(k,l)$ and $C$ is a constant that is depending on the original differential distance$\delta_x$. $C$ has to be determined by a calibration process that is performed by inserting a calibrated wedge before using the instrument for actual measurements.

By summing $\Delta\varphi_D(k\Delta_s, l\Delta_s)$ from $k$=1,..., t, the phase $\varphi_D(t\Delta_s, l\Delta_s)$ is obtained with an additional integration constant. In most of the case, the additional integration constant can be assumed identical for every line and is finally giving a constant over the complete field of view that does not play any significant role.

From the above discussion, it results that the optical phase $\varphi_D$ and amplitude modulus $A_D$ have been determined to implement the digital holographic reconstruction process.

*Digital holography implementation*

It is assumed that the optical phase $\varphi_D$ and the modulus of the amplitude $A_D$ have been obtained in the focus plane of the sample. It results that the complex amplitude field in this plane can be computed according to:

$$U_{Di}(r\Delta_s, t\Delta_s) = A_D(r\Delta_s, t\Delta_s)\exp\{j\varphi_D(r\Delta_s, t\Delta_s)\} \quad (18)$$

Thanks to this information, digital holographic reconstruction technique can be used for imaging planes that are out of focus. This is achieved by implementing a discrete form of the Kirchhoff-Fresnel integral:

$$U_{Do}(r'\Delta_s, t'\Delta_s) = \exp\{jkd\}F_{U,V}^{-1}\exp\left\{\frac{-jk\lambda^2 d}{2N^2\Delta_s^{\ 2}}(U^2+V^2)\right\}F_{r,t}^{+1}U_{Di}(r\Delta_s, t\Delta_s) \quad (19)$$

where, $U_{Di}$ is the measured complex amplitude, $U_{Do}$ is the complex amplitude reconstructed after a refocusing distance of d, $F_{r,t}^{+1}$ is the discrete Fourier transformation, $F_{U,V}^{-1}$ is the inverse discrete Fourier transformation, N, is the sample number along the both axis, $k=2\pi/\lambda$ and $(U,V)$ are integers varying from 0 to N-1. A detailed discussion about the implementation and the range of refocusing distance that can be achieved by digital holography process is discussed in details by the reference [15].

***Applications and advantages of the invention in comparison with the state of art***

The present invention is related to an apparatus and a process for tri-dimensional microscopy by digital holography that results from the integration of a specific differential interferometer into an optical microscope imaging system. The present invention is configured in such a way that it supports the most important microscopy modes as bright field, dark field, fluorescence, differential contrast, phase contrast that are of interest in the major applications in optical microscopy.

The present invention can be advantageously used in the non-invasive study and characterisation of different kinds of samples, in particular for the in vivo imaging of thick living biological samples in order to observe their dynamical behaviours without temporal distortion.

The present invention also allows the measurement of tri- dimensional micro-distributions of refractive indexes inside thick transparent samples. It is meant by "thick sample" that the thickness is too large to obtain a focus image of the sample over the full thickness by classical optical process.

The present invention presents various advantages comparatively to the ones of the state of the art.

The system is able to work in transmission, in reflection and with a wide range of spatial coherence states of the source. Comparatively to the systems using laser beam, the present apparatus and process considerably improve the image quality thanks to the fact that partially spatial coherent illumination can be used.

In addition, comparatively to others systems using partially spatial coherent illumination with the sample in one of the interferometer arm, the present apparatus and process allow to investigate samples with stronger optical phase distortions, and the accurate optical length adjustment of the interferometric arms is performed independently upon the sample and once said adjustment has been made, the system is ready to be used for every sample.

An important application of the present invention is the observation of fluorescent samples. In particular, the present invention allows the non-invasive tri-dimensional in vivo imaging of the dynamic behavior of fluorescent macromolecules or structures, without the temporal distortion of the laser scanning microscopy.

With respect to the previous implementations[19-20] for the fluorescence in digital holography, the proposed method allows to achieve much better quality.

For a direct implementation of digital holography with a fluorescent image, methods and apparatus have been already proposed, see the references 19-22. Although configurations 19, 20 could be theoretically used for fluorescence signals, the authors recognized that the results could be of very poor quality due to the weak contrast of the interferometric signal. No results with fluorescence are provided in those references. At this point, it is very important to emphasize the differences of the present invention comparatively to the configurations proposed in references 19 and 20. Indeed, those configurations seem to be similar to the ones proposed in the present invention as they are also based on Mach-Zehnder or Michelson interferometers placed between the microscope lens and the imaging plane. However, the implementation, the working modes and the performances of those systems are very different to the present apparatus and methods. The differences are the following.

In the present configurations, the two channels of the interferometer are imaged in the same way on the detector plane. The difference between the two channels is a small shift between the two beams on the detector. The apparatus are working as differential interferometer with the same intensity light in the two channels. Moreover, the differential shift is small in comparison with the spatial coherence with in such a way that the interferometric phase contrast is high.

In the configurations proposed in references 19-20, the authors are describing the implementation of absolute interferometric configurations and not differential ones. In order to achieve this goal, one of the interferometric channels, the reference channel, is strongly optically filtered by an aperture to remove any details of the original sample and to achieve a large point spread function in the detector plane. The second beam, the object beam, that is carrying the sample information is incident to the detector without filtering process and is interfering with the reference beam. As the reference beam is strongly filtered, there is a large intensity difference between the two beams that obliges the authors to reduce the object beam intensity by a neutral density filter. Therefore, there is an important loss of light intensity that can be critical for application where the intensity levels are weak. The detector records the interference pattern between the object and the reference beams. In order to optimize the fringe visibility, the authors are placing the detector plane strongly out of focus in such a way that the defocus spread has a size similar to the point spread function of the reference beam. This is a major difference with respect to the present embodiments: in the present invention, samples close to surrounding the focus plane can be analysed for every planes. As demonstrated in reference 15, the digital holographic process is more powerful with respect to the resolution when the sample is close to the focus plane. Moreover, even with the similar point spread function sizes, the configurations of references 19 and 20 have poor interferometric fringe visibility due to the partial coherent nature of the illumination. In the present proposed configurations, the phase contrast is high even in the case of incoherent illumination.

Considering references 21 and 22, said documents disclose apparatus and methods used for 3D fluorescent imaging. However, those systems are very different to the present one and request a scanning of the samples.

With respect to 3D imaging of fluorescent samples, the confocal microscopes are the dominant systems. With respect to the confocal microscopes, the present apparatus and method present the following features:

- There is no need to scan in 3D the sample. Therefore, the acquisition can be faster;
- No coherent laser spot is used to scan the sample. The illumination level is therefore weaker and less invasive for the sample;
- basically, the present apparatus and method are less expensive.

Confocal microscopes are very powerful instruments that provide very high quality results. The major features of the confocal microscopes are the optical sectioning and the capability to remove the noise. With respect to these points, confocal microscopes keep the advantage. Therefore, the apparatus proposed here is more complementary than concurrent with respect to the confocal microscopes.

Furthermore, with respect of the implementation of the patent application WO03/002972, the present apparatus and process do not require that the fluorescence regions are coinciding with regions having different optical refractive indexes or transmittances.

With respect to confocal microscopy, the recording of the information does not request 3D scanning, which is time consuming. The proposed invention is more flexible for the selection of the fluorescent excitation source. In particular, the selected source can be less harmful for living specimens than the ones used in confocal microscopy. A wide range of fluorochromes can be studied. The fluorecent images can be combined with the results obtained in the other microscopy modes provided by the present apparatus and process.

*Differential contrast microscopy*

The present apparatus and process is also able to work as a new type of differential interference contrast (DIC) microscope and presents some advantages with respect to the classical implementations.

Indeed, the classical implementations are using components that take benefits of polarization effects (for example, Normarski microscopes). Therefore, those systems are in general very sensitive to polarization residual birefringence disturbances introduced by the sample containers. Those issues are completely removed with the present apparatus and process.

In addition, in comparison to the Hoffman modulation contrast microscopy, the present proposed configurations use in a more efficient way the numerical aperture of the microscope lens that is fully exploitable. It has also to be emphasized that the present invention gives rise to quantitative phase measurement while systems such as the classical DIC systems are mainly qualitative.

*Optical sectioning of transparent samples*

Moreover, the present apparatus and process also allow investigating the problem of measuring three-dimensional micro-distributions of refractive indexes. In this situation, the source that is used has a very low spatial coherence and the sample is investigated by translating the sample along the optical axis to focus it slice by slice. As the spatial coherence of the source is very limited, the slicing effect is very high and it is possible to reconstruct the three-dimensional refractive index distributions.

The alternative solution to perform the same type of measurement is the optical transmission tomography. However, in this case, it is necessary to use multiple beams and multiple detectors and the state of the art in this field shows that only very simple situations can be investigated.

## REFERENCES

1. U. Schnars and W. Jüptner, "Direct recording of holograms by a CCD target and numerical reconstruction", *Appl. Opt.* **33**, 179-181 (1994).

2. K. Creath, "Temporal Phase Measurement Methods", in Interferogram Analysis: digital fringe pattern analysis / edited by D.W. Robinson, G.T. Reid, IOP Publishing Ltd, 94-140 (1993)

3. I.Yamaguchi and T. Zhang, "Phase-shifting digital holography", *Opt. Lett.* **22**, 1268-1270 (1997).

4. B. Skarman, K. Wozniac and J. Becker "Simultaneous 3D-PIV and temperature measurement using a New CCD based holographic interferometer", Flow Meas. Instr. 7, N°1, pp 1-6 (1996)

5. T.M. Kreis, W.P.O. Jüptner, "Principle of digital holography", Proc. Of the 3rd international workshop on automatic processing of fringe patterns (Fringe '97), Akademie Verlag Series in Optical Metrology, Berlin, held in Bremen, 353-363, 15-17 Sept. (1997)

6. B. Nilsson and T.E. Carlsson, Direct three-dimensional shape measurement by digital light-in-flight holography, *Appl. Opt.* **37**, 7954-7959 (1998).

7. E.Cuche, F.Bevilacqua and C. Depeursinge, "Digital holography for quantitative phase contrast imaging", *Opt. Lett.* **24**, 291-293 (1999)

8. D.O. Hogenboom, C.A. Dimarzio, T.J. Gaudette, A.J. Devaney, S.C. Lindberg, "Three-dimensional images generated by quadrature interferometry", *Opt. Lett.* **23**, 783-785 (1998).

9. M. Adams, T.M. Kreis, W.P.O. Jüptner, "Particle size and position measurement with digital holography", Proc. SPIE **3098**, 234-240 (1998)

10. E. Cuche, P. Marquet and C. Despeuringe, « Spatial filtering for zero-order and twin-image elimination in digital off-axis holography", *Appl.Opt.* **39**, 4070-4075 (2000)

11. B. Javidi, E. Tajahuerce, « Encrypting three-dimensional information with digital holography » *Opt. Lett.* **39**, 6595-6601 (2000)

12. F. Dubois, L. Joannes, O. Dupont, J.L. Dewandel and J.C. Legros, "An integrated optical set-up for fluid-physics experiments under microgravity conditions", Meas. Sci. Technol., vol. 10, 934-945 (1999).

13. T. Zhang and I. Yamaguchi, "Three-dimensional microscopy with phase-shifting digital holography", *Opt. Lett.* **23**, 1221-1223 (1998).

14. I. Yamaguchi, J.-I. Kato, S. Otha and J. Mizuno, « image formation in phase-shifting digital holography and applications to microscopy " Appl. Opt. 40, 6177-6186 (2001)

15. F. Dubois, L. Joannes, J.-C. Legros, "Improved three-dimensional imaging with digital holography microscope using a partial spatial coherent source " *Appl. Opt.* **38**, 7085-7094 (1999)

16. F. Dubois, O. Monnom, C. Yourassowsky and J.-C. Legros, "Border processing in digital holography by extension of the digital hologram and reduction of the higher spatial frequencies", Appl. Opt. 41, 2621-2626 (2002)

17. F. Dubois, C. Minetti, O. Monnom, C. Yourassowsky, J.-C. Legros, « Pattern recognition with digital holographic microscope working in partially coherent illumination", Appl. Opt. 41, 4108-4119 (2002)

18. F. Dubois and C. Yourassowsky,"Procédé et dispositif destinés à l'obtention par microscopie d'images en trois dimensions d'un échantillon », Demande PCT 01-07-2002, N° de dépôt PCT/BE02/00111 - priorités : EP - 01870147.4-29 juin 2001, EP-01870281.1-18 décembre 2001

19."P. Klysubun and G. Indebetouw, « A posteriori processing of spatiotemporal digital microholograms », J. Opt. Soc. Am. A 18, 326-331 (2001)

20."P. Klysubun and G. Indebetouw, « Spatiotemporal digital microholography », J. Opt. Soc. Am. A 18, 319-325 (2001)

21.B. W. Schilling, T.-C. Poon, G. Indebetouw, B. Storrie, K. Shinoda, Y. Suzuki and M. H. Wu, "Three-dimensional holographic fluorescence microscopy", Opt. Lett. 19, 1506-1508 (1997)

22.G. Indebetouw, T. Kim, T.-C. Poon and B. W. Schilling, "Three-dimension location of fluorescent inhomogeneities in turpid media by scanning heterodyne holography", Opt. Lett. 23, 135-137 (1998)

23.D. W. Robinson and G.T Reid - Editors, "Interferogram Analysis" (Institute of Physics Publishing, 1993)

## Claims

**1.** An apparatus for the visualisation of a sample, said apparatus comprising as elements at least:

(i) a sample cell (2) able to contain a sample to be studied;
(ii) an illumination source (1) for illuminating said sample and creating thereby an incident sample beam;
(iii) a microscope (3,4) coupled to an interferometer (5) for generating an interference pattern from said incident sample beam by splitting said beam into a first output beam and a second output beam following two different optical paths in the interferometer and by recombining said output beams;
(iv) imaging means (7) for detecting said interference pattern,

said apparatus being **characterised in that** the apparatus further comprises optical tilting means located in one

of the optical paths of the interferometer so as to create a tilt between the first output beam and the second output beam, said tilt resulting into a shift between the first output beam and the second output beam on the imaging means (7), and the relative arrangement of said optical tilting means and the other elements of the apparatus being such as to obtain a differential interference pattern on said imaging means (7).

**2.** The apparatus according to claim 1, **characterised in that** it further comprises an optical compensator located in the other optical path of the interferometer.

**3.** The apparatus according to claim 2, **characterised in that** said optical compensator is an optical flat (18).

**4.** The apparatus according to any one of claims 1 to 3, **characterised in that** said optical tilting means comprises a wedge (17).

**5.** The apparatus according to any one of the preceding claims, **characterised in that** the imaging means are two dimensional imaging means defined by a pixel size and by a number of pixels in one dimension, and said shift is smaller than said pixel size.

**6.** The apparatus according to any one of the preceding means, **characterised in that** it further comprises computer means (8) for recording and processing said detected interference pattern so as to provide reconstructed 3D-images of the sample.

**7.** The apparatus according to claim any one the preceding claims, **characterised in that** the interferometer comprises as elements a first sub-unit and a second sub-unit, the first sub-unit of the interferometer being fixed, the second sub-unit being movable in translation and/or in rotation so as to allow an equalization of the optical paths of the first output beam and of the second output beam.

**8.** The apparatus according to claim 7, **characterised in that** the second sub-unit is mounted on a mechanical system (20), preferably comprising a piezoelectric transducer (23), for performing said movement in translation and/or in rotation.

**9.** The apparatus according to claim 7 or 8, **characterised in that** the interferometer is based on a Mach-Zehnder interferometer wherein the first sub-unit includes a first beam splitter and a first mirror, and the second sub-unit comprises a second beam splitter and a second mirror, the first optical path comprising the first beam-splitter, the second mirror and the second beam splitter, and the second optical path comprising the first beam-splitter, the first mirror and the second beam splitter.

**10.** The apparatus according to claim 7 or 8, **characterised in that** the interferometer is based on a Mach-Zehnder interferometer wherein the first sub-unit and the second sub-unit include respectively a first optical prism and a second optical prism, said first optical prism and said second optical prism being each part of the two optical paths.

**11.** The apparatus according to any one of the preceding claims, **characterised in that** it is adapted so as to allow the implementation of the phase stepping method for extracting the optical phase information from the interference pattern and reconstructing an image of the sample.

**12.** The apparatus according to claim 7 or 8, **characterised in that** the interferometer is based on a Michelson interferometer, the first sub-unit comprising a beam-splitter and a first mirror, the second sub-unit comprising a second mirror.

**13.** The apparatus according to claim 12, **characterised in that** the optical tilting means comprises said first and second mirrors and said beamsplitter themselves whose position and orientation relatively to the other elements of the apparatus is adjusted so as to obtain said tilt.

**14.** The apparatus according to any one of the preceding claims, **characterised in that** the source is selected from the group consisting of spatially coherent sources, spatially partially coherent sources, spatially incoherent sources, and fluorescence excitation sources.

**15.** The apparatus according to any one of the preceding claims, **characterised in that** the microscope comprises an objective (4) and said apparatus further comprises translation means (3) for moving the sample cell in front of said

objective (4).

**16.** Process for the visualisation of a sample, **characterised in that** it comprises the step of using the apparatus according to any one of the preceding claims.

**17.** The process according to claim 16, **characterised in that** it comprises the following steps:

- illuminating a sample to be studied with the illumination source, so as to have a sample beam;
- selecting the transmitted part of said sample beam through a microscope lens of the microscope;
- with the interferometer:
  - splitting said part of the sample beam into a first output beam and a second output beam of different optical paths;
  - creating a tilt between said first output beam and said second output beam inside the interferometer with the optical tilting means placed in one of said optical paths;
  - recombining said output beams and equalising their optical paths,

so that said output beams may interfere according an interference pattern on the imaging means, the relative arrangement of said optical tilting means and the other elements of the apparatus being adjusted so that said interference pattern formed on the imaging means is a differential interference pattern.

**18.** The process according to claim 16 or 17, **characterised in that** it further comprises the step of recording and processing said interference pattern with the computer means so as to obtain a reconstructed 3D-image of the sample.

**19.** Use of the apparatus or the process according to the preceding claims in differential contrast microscopy and/or in digital holographic microscopy and/or for the measurement of micro-distributions of refractive index inside a sample.

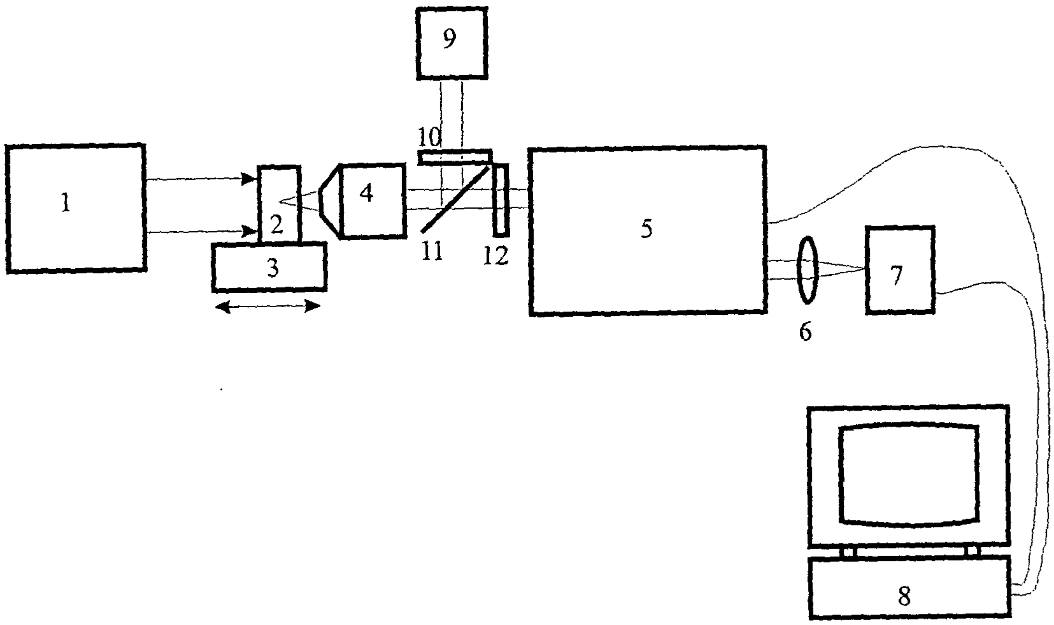


FIG.1

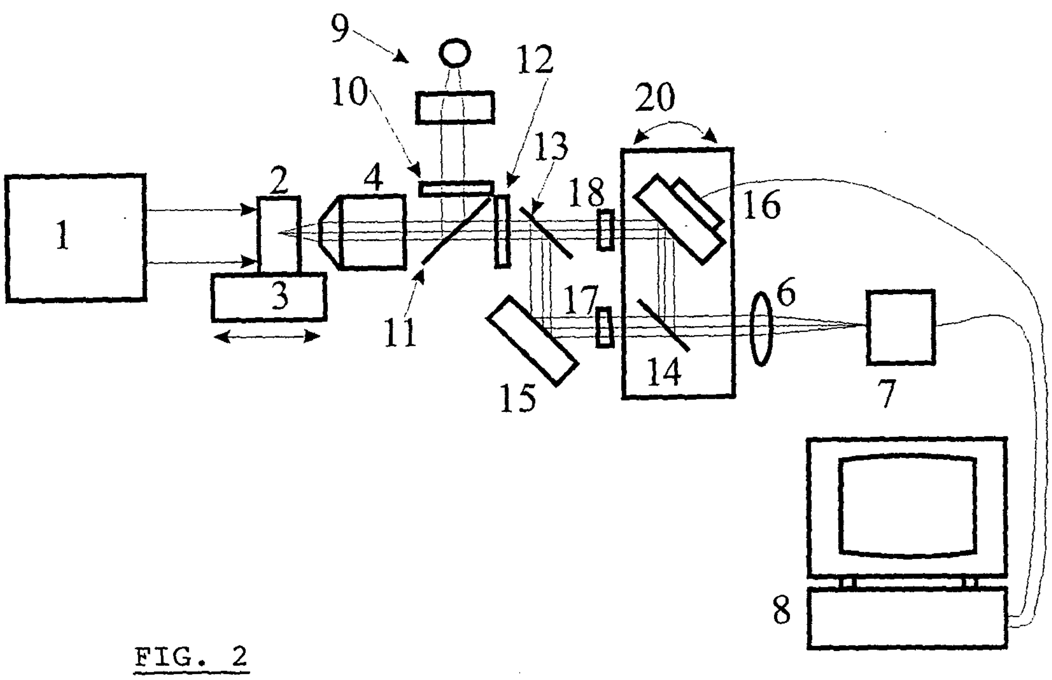


FIG. 2

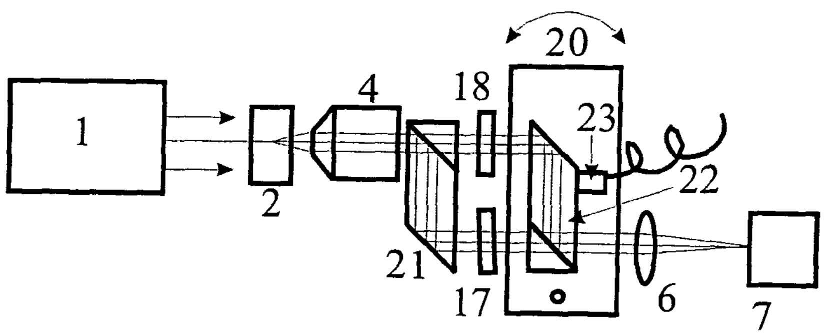


FIG. 3

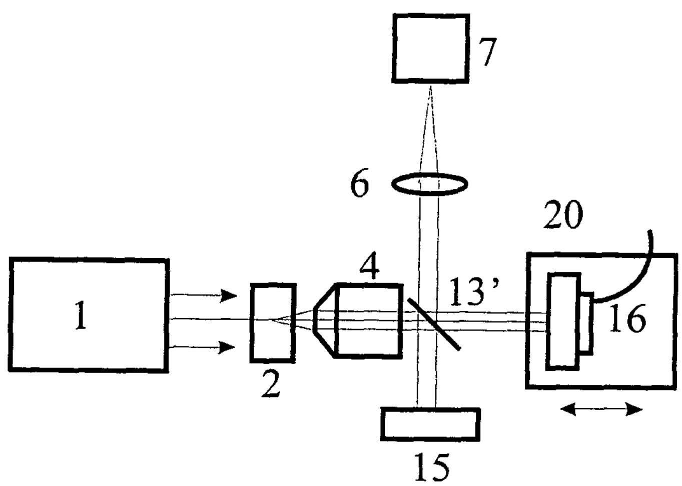


FIG. 4

European Patent Office

# EUROPEAN SEARCH REPORT

Application Number
EP 03 44 7256

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 257 089 A (STETSON KARL A) 26 October 1993 (1993-10-26) * figure 2 * * column 3, line 67 - column 7, line 65 * --- | 1-8,11, 14-19 | G01B9/02 |
| X | PRETZLER G ET AL: "HIGH-ACCURACY DIFFERENTIAL INTERFEROMETRY FOR THE INVESTIGATION OF PHASE OBJECTS" MEASUREMENT SCIENCE AND TECHNOLOGY, IOP PUBLISHING, BRISTOL, GB, vol. 4, no. 6, 1 June 1993 (1993-06-01), pages 649-658, XP000368116 ISSN: 0957-0233 * figures 1,2 * * page 650, column 2, line 33-37 * --- | 1,5-19 | |
| X | KEN-ICHI OHTSUKA: "Simple polarization shearing interferometry for a microscope" APPLIED OPTICS, vol. 27, no. 6, 15 March 1988 (1988-03-15), pages 1179-1182, XP002271256 * figure 2A * * page 1180, column 2, line 7-10 * --- | 1,6,11, 14-19 | TECHNICAL FIELDS SEARCHED (Int.Cl.7) G01B G01J |
| A | US 6 246 483 B1 (SMITH JOHN P ET AL) 12 June 2001 (2001-06-12) * column 1, line 10-15 * * column 2, line 15 - line 25 * --- | 1 | |
| A | EP 1 321 738 A (ITT MFG ENTERPRISES INC) 25 June 2003 (2003-06-25) * figure 1 * --- | 2,3 | |
| A | US 4 682 025 A (SHELTON JEAN C ET AL) 21 July 1987 (1987-07-21) * figure 6 * * column 9, line 30-40 * --- -/-- | 4,7,8 | |

The present search report has been drawn up for all claims

| Place of search | Date of completion of the search | Examiner |
|---|---|---|
| THE HAGUE | 4 March 2004 | Quertemont, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

3

EPO FORM 1503 03.82 (P04C01)

European Patent Office

# EUROPEAN SEARCH REPORT

Application Number
EP 03 44 7256

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | WO 03 002972 A (DUBOIS FRANK ;UNIV BRUXELLES (BE); YOURASSOWSKI CATHERINE (BE)) 9 January 2003 (2003-01-09) * paragraphs [0001],[0047],[0052] * ----- | 1-19 | |
| | | | TECHNICAL FIELDS SEARCHED (Int.Cl.7) |

The present search report has been drawn up for all claims

3

| Place of search | Date of completion of the search | Examiner |
|---|---|---|
| THE HAGUE | 4 March 2004 | Quertemont, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 44 7256

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2004

| Patent document cited in search report | | Publication date | Patent family member(s) | | | Publication date |
|---|---|---|---|---|---|---|
| US 5257089 | A | 26-10-1993 | NONE | | | |
| US 6246483 | B1 | 12-06-2001 | GB | 2340223 | A | 16-02-2000 |
| | | | WO | 0011430 | A1 | 02-03-2000 |
| | | | AU | 5184299 | A | 14-03-2000 |
| | | | DE | 69906823 | D1 | 15-05-2003 |
| | | | DE | 69906823 | T2 | 13-11-2003 |
| | | | EP | 1200797 | A1 | 02-05-2002 |
| EP 1321738 | A | 25-06-2003 | EP | 1321738 | A2 | 25-06-2003 |
| US 4682025 | A | 21-07-1987 | DE | 3571501 | D1 | 17-08-1989 |
| | | | EP | 0158505 | A2 | 16-10-1985 |
| | | | JP | 1774035 | C | 14-07-1993 |
| | | | JP | 4060538 | B | 28-09-1992 |
| | | | JP | 61034430 | A | 18-02-1986 |
| WO 03002972 | A | 09-01-2003 | EP | 1321760 | A1 | 25-06-2003 |
| | | | WO | 03002972 | A2 | 09-01-2003 |

EPO FORM P0459

For more details about this annex : see Official Journal of the European Patent Office, No. 12/82